# EUROPÄISCHE PATENTSCHRIFT

(11) **EP 3 106 327 B1**
(45) Veröffentlichungstag und Bekanntmachung des Hinweises auf die Patenterteilung: **06.11.2019**
(21) Anmeldenummer: 16174500.5
(22) Anmeldetag: 15.06.2016
(51) Int. Cl.: B60D 1/46, B60D 1/52

(54) **ANHÄNGEKUPPLUNG MIT FLANSCHTEILEN**
TRAILER COUPLING WITH FLANGE PORTIONS
ATTELAGE ET PARTIES DE BRIDE

(30) Priorität: 17.06.2015 DE 202015103206 U
(43) Veröffentlichungstag der Anmeldung: 21.12.2016
(73) Patentinhaber: WESTFALIA - Automotive GmbH, 33378 Rheda-Wiedenbrück (DE)
(72) Erfinder: Krohn, Gerald, 33378 Rheda-Wiedenbrück (DE)
(74) Vertreter: Patentanwälte Bregenzer und Reule Partnerschaftsgesellschaft mbB

(56) Entgegenhaltungen:
- WO-A1-2004/026598
- DE-A1- 3 512 981
- US-A- 5 358 269

## Beschreibung

Die Erfindung betrifft eine Anhängekupplung für ein Kraftfahrzeug, insbesondere einen Personenkraftwagen, gemäß dem Oberbegriff des Anspruchs 1.

Eine derartige Anhängekupplung ist beispielsweise in WO 2004/026589 A1 erläutert.

Eine aus DE 10 2011 009 306 A1 bekannte Anhängekupplung ist an verschiedene Anforderungen anpassbar, so dass zum Beispiel unterschiedliche Kupplungselemente montierbar sind. Allerdings ist die Flexibilität der bekannten Anhängekupplung noch nicht optimal.

Es ist daher die Aufgabe der vorliegenden Erfindung, eine verbesserte Anhängekupplung bereitzustellen.

Zur Lösung der Aufgabe ist bei eine Anhängekupplung gemäß der technischen Lehre des Anspruchs 1 vorgesehen.

Der Vorteil dieser Anhängekupplung ist es, dass das Kuppelteil des Kupplungsarms in unterschiedlichen Höhenpositionen bezüglich der Fahrbahnoberfläche am Halterteil befestigbar ist. Dadurch ist eine bequeme Anpassung an unterschiedliche Erfordernisse möglich, beispielsweise unterschiedliche Deichselhöhen oder dergleichen. Es ist auch möglich, dass Kupplungsteil des Kupplungsarms beispielsweise zum Tragen eines Lastenträgers etwas höher oder tiefer auszurichten als für den Betrieb mit einem Anhänger. So kann es zum Beispiel komfortabel sein, wenn ein Lastenträger etwas tiefer steht, sodass er leichter beladen und entladen werden kann. Beispielsweise müssen Fahrräder oder dergleichen andere Ladegüter auf eine niedrige Ladefläche aufgeladen werden, wenn das Kupplungsteil entsprechend nahe bei der Fahrbahnoberfläche ist. Wenn jedoch andererseits ein Freiraum des Kraftfahrzeugs zur Fahrbahnoberfläche notwendig ist, zum Beispiel zum Fahren im Gelände, kann das Kupplungsteil entsprechend weiter oben am Halterteil montiert werden.

Als Kuppelelement ist beispielsweise eine Kupplungskugel, ein polygonaler Kupplungskörper oder auch ein Steckvorsprung oder eine Steckaufnahme vorteilhaft möglich.

Vorteilhaft ist vorgesehen, dass sich die erste Stützfläche oder die Stützfläche des ersten Flanschteils im am Kraftfahrzeug montierten Zustand der Anhängekupplung im Wesentlichen vertikal erstreckt. Die zweite Stützfläche oder die Stützfläche des zweiten Flanschteils hat dann selbstverständlich vorzugsweise dieselbe Ausrichtung. Allerdings ist es durchaus auch denkbar, dass die erste Stützfläche eine Schrägneigung gegenüber der Vertikalen aufweist, beispielsweise um ca. 2-20°, vorzugsweise etwa um 10° gegenüber einer Vertikalen.

Die Stützflächen, zumindest eine davon, sind zweckmäßigerweise als Planflächen ausgestaltet oder weisen eine Planfläche auf. Beispielsweise sind eine oder beide der Stützflächen vollkommen eben. Dadurch ist eine flächige Anlage der Stützflächen aneinander gewährleistet.

Eine Planfläche ist einfach zu fertigen und ermöglicht eine großflächige Abstützung der Stützflächen aneinander.

Es ist allerdings auch möglich, dass durch Formschlusskonturen, beispielsweise Rippen, Nocken oder dergleichen, eine zusätzliche Querabstützung quer zur Oberfläche der Stützflächen gegeben ist. Beispielsweise ist dadurch eine höhere Stabilität oder Belastbarkeit des Kupplungsarms realisierbar. Beim Fahrbetrieb auftretende Kräfte müssen nicht nur durch die Schrauben oder die Verschraubung aufgenommen werden, sondern werden auch von den Formschlusskonturen abgefangen oder abgestützt.

Bevorzugt ist es, wenn die Stützflächen zueinander passende, korrespondierende Formschlusskonturen aufweisen. So kann beispielsweise ein beispielsweise an der einen Stützfläche eine vorstehende Rippe vorgesehen sein, die in eine Nut der anderen Stützfläche formschlüssig passt.

Zueinander passende Formschlusskonturen können auch als Montagehilfe dienen, d.h. dass die Flanschteile leichter miteinander verschraubbar sind, weil die ineinander eingreifenden Formschlusskonturen die Flanschteile an Ort und Stelle halten und man so Schrauben und Schraubaufnahmen besser miteinander in Eingriff bringen kann.

Eine Ausgestaltung kann vorsehen, dass die erste Stützfläche und/oder die zweite Stützfläche eine Rippe oder Stufe aufweist. Es ist aber auch möglich, dass an der einen Stützfläche mindestens ein kugeliger Vorsprung vorgesehen ist, der in eine entsprechende kugelige Aufnahme oder Kalotte der anderen Stützfläche eingreift.

Es ist auch möglich, dass eine oder beide Stützflächen eine Wölbung aufweisen.

Sofern an der Stützfläche des einen Flanschteils eine Formschlusskontur vorgesehen ist, an der Stützfläche des anderen Flanschteils nicht, ist es auch möglich, dass die Formschlusskontur des einen Stützteils frei in eine Aufnahme oder eine Aussparung des anderen Flanschteils eingreift. Dies ist beispielsweise dann vorteilhaft, wenn eine Formschlusskontur in einer der Montagelängspositionen, in welchen das Kupplungsteil und das Halterteil miteinander verbindbar sind, sozusagen inaktiv sein soll.

Weiterhin ist es denkbar und möglich, dass ein Zwischenkörper vorgesehen ist, der sozusagen sandwichartig zwischen den Stützflächen angeordnet ist und eine Anpassung an die jeweiligen Formschlusskonturen des anderen Flanschteils ermöglicht. Am Zwischenkörper sind entsprechende Komplementär-Formschlusskonturen oder Aussparungen für Formschlusskonturen der jeweils angrenzenden Stützfläche des Flanschteils vorgesehen.

Eine vorteilhafte Ausgestaltung sieht weiterhin vor, dass auch die Formschlusskonturen der ersten und der mindestens einen zweiten Montagelängsposition, in welcher das Kupplungsteil und das Halterteil miteinander verbindbar sind, sozusagen Rechnung tragen. Beispielsweise ist dazu vorgesehen, dass das erste Flanschteil der ersten und der mindestens einen zweiten Montagelängsposition zugeordnete Formschlusskonturen aufweist, so dass mindestens eine Formschlusskontur, zum Beispiel eine Rippe, eine kugelige Formschlusskontur oder dergleichen, des anderen Flanschteils in der jeweiligen Montagelängsposition in eine dieser Formschlusskonturen des ersten Flanschteils passt. So sind beispielsweise zwei Montagelängspositionen zugeordnete Formschlusskonturen, zum Beispiel Formschlussaufnahmen, am erstenFlanschteil vorgesehen, in die der Formschlussvorsprung des anderen Flanschteils in jeweils einer der beiden Montagelängspositionen eingreift.

Eines der Flanschteile kann einen integralen Bestandteil des Halterteils oder des Kupplungsteils bilden. So kann zum Beispiel das erste Flanschteil ein Bestandteil des Halterteils oder das zweite Flanschteil ein Bestandteil des Kupplungsteils bilden. Konstruktiv hat dies den Vorteil, dass das jeweilige Flanschteil sozusagen bei der Fertigung des Kupplungsteils oder des Halterteils direkt mit produziert werden kann, beispielsweise geschmiedet, gegossen oder beides, so dass kein weiteres Bauteil hergestellt werden muss.

Die Erfindung sieht vor, dass eines oder beide der Flanschteile mit dem Halterteil und dem Kupplungsteil lösbar verbindbar sind. Das Flanschteil ist sowohl vom Halterteil als auch vom Kupplungsteil lösbar und mit beiden verbindbar.

Das erste Flanschteil ist beispielsweise mit dem einen Teil von Kupplungsteil oder Halterteil lösbar verbindbar und bildet zweckmäßigerweise das erste Flanschteil, während das andere Teil von Kupplungsteil oder Halterteilen das zweite Flanschteil aufweist, welches mit dem ersten, lösbaren Flanschteil in mindestens zwei Montagelängspositionen verwendbar ist. Das zweite Flanschteil kann einen integralen Bestandteil des Kupplungsteils oder Halterteils bilden oder ebenfalls lösbar mit dem Kupplungsteil oder Halterteil verbindbar sein, beispielsweise anhand einer Schraubanordnung.

Ein bevorzugtes Konzept sieht also vor, dass das lösbare Flanschteil, insbesondere das erste Flanschteil, am Halterteil oder am Kupplungsteil anhand einer Verschraubung befestigbar ist. Das lösbare Flanschteil weist zweckmäßigerweise die erste Schraubanordnung zur Verbindung mit der zweiten Schraubanordnung auf sowie eine weitere oder dritte Schraubanordnung zur Verbindung mit dem Halterteil oder dem Kupplungsteil. Diese weitere oder dritte Schraubanordnung weist beispielsweise Schrauben und/oder Schraubaufnahmen auf.

Bevorzugt ist es, wenn die erste Schraubanordnung ein erstes Lochbild und die weitere Schraubanordnung zur Verbindung mit dem Halterteil oder dem Kupplungsteil ein weiteres oder drittes Lochbild aufweist. Das erste Lochbild und das dritte Lochbild sind zweckmäßigerweise so voneinander verschieden, dass das zweite Flanschteil nicht mit dem dritten, zur Verbindung mit dem Halterteil oder Kupplungsteil vorgesehenen, Lochbild verbindbar ist. Diese Maßnahme hat den Vorteil, dass das zur Verbindung mit dem Kupplungsteil oder Halterteil verwendete dritte Lochbild eine eindeutige Positionierung des lösbaren Flanschteils in einer einzigen oder mehreren voneinander verschiedenen Positionen am Kupplungsteil oder Halterteil ermöglicht, ohne dass eine Befestigung des zweiten Flanschteils am ersten bzw. lösbaren Flanschteil anhand des ersten Lochbilds beeinträchtigt wäre oder dass versehentlich das zweite Flanschteil falsch am ersten Flanschteil montierbar ist.

Das lösbare Flanschteil bildet erfindungsgemäß eine Adapterplatte, die zur Adaption des Halterteils und des Kupplungsteils aneinander ausgestaltet ist und mit beiden Teilen, dem Halterteil und dem Kupplungsteil lösbar verbindbar ist. Dadurch ist es möglich, mit geringem Aufwand unterschiedliche Adapterplatten bereitzustellen, sodass eine große Flexibilität zur Anpassung der Anhängekupplung an unterschiedliche Erfordernisse, insbesondere auch an unterschiedliche Fahrzeugtypen, ohne großen Aufwand realisierbar ist.

Eine vorteilhafte Ausgestaltung der Erfindung sieht vor, dass das Kupplungsteil oder das Halterteil einen Stützabschnitt zur Befestigung des ersten Flanschteils oder des lösbaren Flanschteils aufweist. Der Stützabschnitt ist beispielsweise flanschartig und/oder weist eine Planfläche auf. Somit ist das Flanschteil optimal am Kupplungsteil oder Halterteil abgestützt.

Eine Variante kann dabei vorsehen, dass das lösbare Flanschteil an dem Stützabschnitt in einer einzigen Montageposition oder Montagelängsposition befestigbar ist. Eine unterschiedliche Höhe, die das Kuppelelement zur Fahrbahnoberfläche aufweisen soll, kann bei dieser Konfiguration erzielt werden, indem die Flanschteile in den unterschiedlichen Montagelängspositionen aneinander montiert werden.

Es ist aber auch möglich, dass sozusagen der Stützabschnitt oder das lösbare Flanschteil selbst eine Montage in unterschiedlichen Montagelängspositionen zur Adaption der Höhe oder des Abstands des Kuppelelements zu der Fahrbahnoberfläche ermöglichen. Vorzugsweise ist vorgesehen, dass zur Einstellung unterschiedlicher Abstände des Kuppelelements zu der Fahrbahnoberfläche das lösbare Flanschteil an dem Stützabschnitt in mindestens zwei voneinander verschiedenen Montagelängspositionen montierbar ist, wobei am Stützabschnitt und/oder am lösbaren Flanschteil eine Schraubanordnung von Schrauben und/oder Schraubaufnahmen zur Verschraubung des jeweils anderen Teils von Stützabschnitt oder Flanschteil in den mindestens zwei voneinander verschiedenen Montagelängspositionen vorgesehen ist. So kann beispielsweise ein Lochbild am Flanschteil vorgesehen sein, das zu einem Lochbild am Stützabschnitt in zwei oder weiteren Montagelängspositionen jeweils passt. Somit können Schrauben oder Schraubbolzen in diesen verschiedenen Montagelängspositionen jeweils durch das Lochbild von Flanschteil und Stützteil hindurch gesteckt werden. Es ist auch möglich, dass beispielsweise am Stützabschnitt Schraubaufnahmen für Schrauben vorgesehen sind, wobei die Schraubaufnahmen mit Schraublöchern eines Lochbilds am lösbaren Flanschteil in mindestens zwei voneinander verschiedenen Montagelängspositionen fluchten.

Auf diesem Wege ist es beispielsweise möglich, zum einen die Flanschteile an sich in unterschiedlichen Montagelängspositionen, beispielsweise in zwei Montagelängspositionen, relativ zueinander zu positionieren und dann zu verschrauben, zum andern zusätzlich auch das lösbare Flanschteil am Stützabschnitt von Halterteil oder Kuppelteil noch in zwei oder weiteren Montagelängspositionen zu montieren. Somit ist also z.B. eine sehr feine Adaption der Höhe oder des Abstands des Kuppelelements zur Fahrbahnoberfläche einstellbar. Weiterhin kann auf diesem Wege auch eine besonders weite Adaption möglich sein, d.h. dass sich sozusagen die Montagelängspositionen, in denen das lösbare Flanschteil am Stützabschnitt von Halterteil oder Kuppelteil montierbar ist, und zudem die Montagelängspositionen, in denen das lösbare Flanschteil mit dem anderen, zweiten Flanschteil verbindbar ist, sozusagen addieren.

Bevorzugt ist das lösbare Flanschteil wie erwähnt das erste Flanschteil. An dem ersten Flanschteil sind zweckmäßigerweise zwei Schraubanordnungen vorgesehen, von denen eine zur Montage des ersten Flanschteils am Stützabschnitt des Kupplungsteils oder des Halterteils in mindestens zwei voneinander verschiedenen Montagelängspositionen vorgesehen ist, die andere Schraubanordnung dazu dient, das erste Flanschteil am jeweils anderen Teil von Kupplungsteil oder Halterteil in mindestens zwei verschiedenen Montagelängspositionen zu montieren.

Zweckmäßigerweise ist vorgesehen, dass mindestens eines der Flanschteile als ein Plattenkörper ausgestaltet ist. Die plattenartige Gestalt des Flanschkörpers oder Flanschteils ist einfach zu fertigen.

Weiterhin ist es vorteilhaft, wenn die Flanschteile etwa längsmittig am Kupplungsarm angeordnet sind. So weist der Kupplungsarm beispielsweise einen Längsabschnitt auf, der sozusagen durch die Flanschteile unterteilt ist. Zweckmäßigerweise ist es jedenfalls so, dass die Flanschteile an einem ansonsten im Wesentlichen geradlinig verlaufenden Armabschnitt des Kupplungsarms vorgesehen sind.

Bevorzugt ist es vorgesehen, dass die Flanschabschnitte im am Kraftfahrzeug montierten Zustand etwa unterhalb eines Stoßfängers oder knapp hinter einem Stoßfänger angeordnet sind.

Vorzugsweise ist vorgesehen, dass im am Kraftfahrzeug montierten Zustand der Anhängekupplung mindestens ein Flanschteil, vorzugsweise beide Flanschteile, hinter einem Stoßfänger oder einer Heckschürze des Kraftfahrzeugs verborgen sind. Bei dieser Ausgestaltung sind also die Flanschteile in einem Zwischenraum zwischen Stoßfänger und Karosserie des Kraftfahrzeugs verborgen angeordnet. Dadurch fällt dem Betrachter die konstruktive Ausgestaltung der Anhängekupplung nicht auf.

Im Hinblick auf die Höhenanpassung des Kuppelelements, kann es aber auch vorteilhaft sein, wenn die Flanschteile sozusagen im freien Bereich sind, das heißt nicht hinter dem Stoßfänger verborgen sind. Es ist also vorteilhaft, wenn im am Kraftfahrzeug montierten Zustand der Anhängekupplung beide Flanschteile in einem freien Bereich zwischen dem Stoßfänger und dem Kuppelelement, insbesondere der Kupplungskugel, des Kupplungsteils und dem Stoßfänger angeordnet sind. Dadurch sind die Flanschteile für eine Montage bequem zugänglich, d.h. der Bediener kann die Flanschteile in unterschiedlichen Montagelängspositionen miteinander verbinden, ohne sozusagen unter das Kraftfahrzeug greifen zu müssen.

Zu einem besonders festen und guten Halt des Halterteils am fahrzeugseitigen Halter trägt es vorteilhaft bei, wenn am Halterteil mindestens eine Formschlusskontur, vorzugsweise mehrere Formschlusskonturen, zum Eingriff in eine am fahrzeugseitigen Halter vorgesehene Formschlusskontur, beispielsweise eine Formschlussaufnahme, vorgesehen ist. Beispielsweise sind die Formschlusskonturen keilförmig oder rund.

Zweckmäßigerweise ist eine Verriegelungseinrichtung in Gestalt einer Art Innenverriegelung vorgesehen. Vorteilhaft ist vorgesehen, dass die Verriegelungseinrichtung mindestens eine Verriegelungsaufnahme im Bereich der Steckaufnahme des fahrzeugseitigen Halters aufweist, beispielsweise eine kalottenförmige Verriegelungsaufnahme, eine Rinne, Nut oder dergleichen, in welche mindestens ein Verriegelungskörper im Bereich des Steckvorsprungs des Halterteils eingreift, wenn eine Verriegelungsstellung eingenommen ist. Der Verriegelungskörper ist zweckmäßigerweise ein Formschlusskörper. Beispielsweise eignen sich Kugeln, Bolzen oder dergleichen andere Rollkörper besonders gut als Formschlusskörper oder Verriegelungskörper. Zur Betätigung des mindestens einen Verriegelungskörpers dient ein Betätigungskörper, zum Beispiel ein bolzenförmiger oder stiftförmiger Betätigungskörper. Bevorzugt ist vorgesehen, dass sämtliche beweglichen Teile der Verriegelungsvorrichtung im oder am Kupplungsarm, insbesondere dem Halterteil, beweglich gelagert sind.

Zwar ist es vorteilhaft, wenn zur Betätigung des Betätigungskörpers eine manuelle Handhabe vorgesehen ist. Es ist aber auch denkbar, dass der Betätigungskörper elektrisch oder semielektrisch betätigbar ist.

Bevorzugt ist der Betätigungskörper in Richtung einer Verriegelungsstellung des mindestens einen Verriegelungskörpers federbelastet.

Eine zweckmäßige Ausführungsform der Erfindung sieht vor, dass eine Steckachsrichtung der Steckaufnahme und des Steckvorsprungs im am Kraftfahrzeug montierten Zustand der Anhängekupplung im Wesentlichen vertikal verläuft. Aber auch ein horizontaler oder zur Horizontalen schräggeneigter Verlauf der Steckachsrichtung ist ohne weiteres möglich.

Eine zweckmäßige und vorteilhafte Ausgestaltung der Erfindung sieht vor, dass die Stützflächen der Flanschteile oder die Stützflächen der Stützabschnitte von Kupplungsteil oder Halterteil jeweils vollflächig aufeinander liegen, unabhängig von der jeweiligen Montagelängsposition. Eine Variante sieht dabei vor, dass die Stützfläche des ersten Flanschteils eine solche Ausdehnung hat, dass die Stützfläche des zweiten Flanschteils in mindestens zwei, vorzugsweise mehreren oder allen Montagelängspositionen vollflächig auf der Stützfläche des ersten Flanschteils aufliegt.

Nachfolgend werden Ausführungsbeispiele der Erfindung anhand der Zeichnung erläutert. Es zeigen:

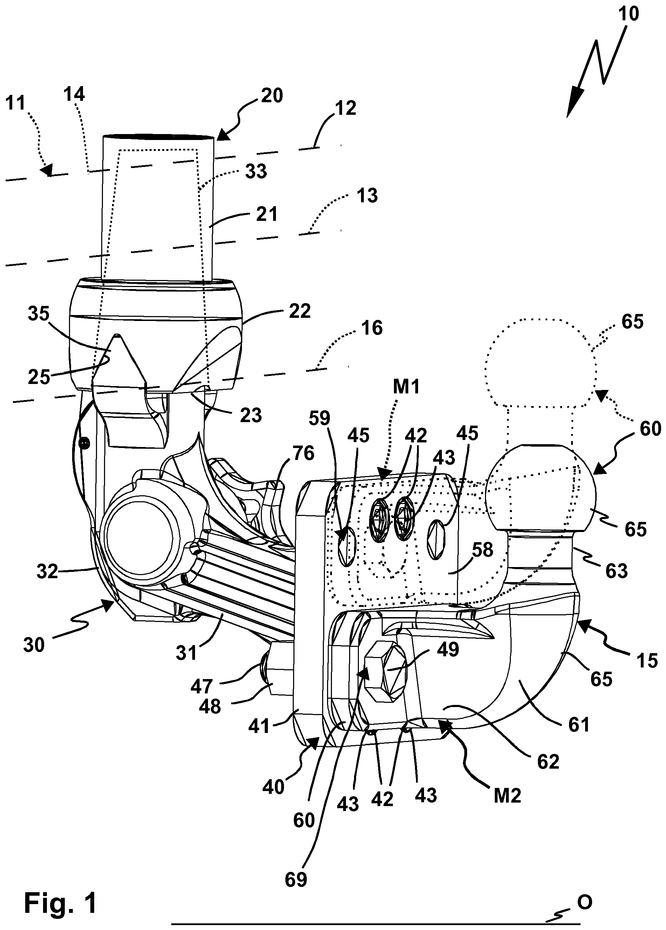

- Figur 1: eine perspektivische Schrägansicht einer erfindungsgemäßen Anhängekupplung,

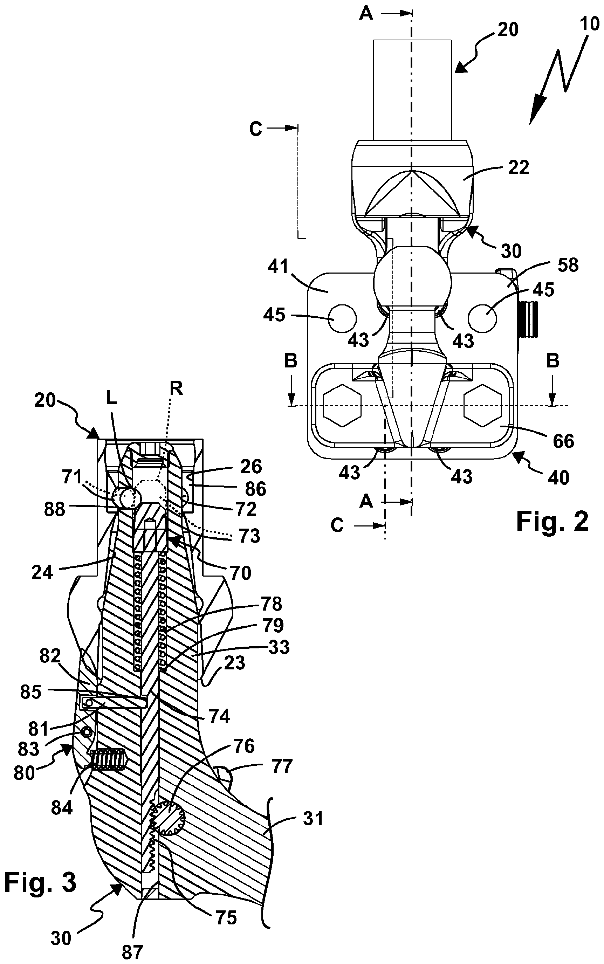

- Figur 2: eine Frontalansicht auf die Anhängekupplung gemäß Figur 1,
- Figur 3: einen Querschnitt durch die Anhängekupplung gemäß vorstehender Figuren, etwa entlang einer Schnittlinie A-A in Figur 2,

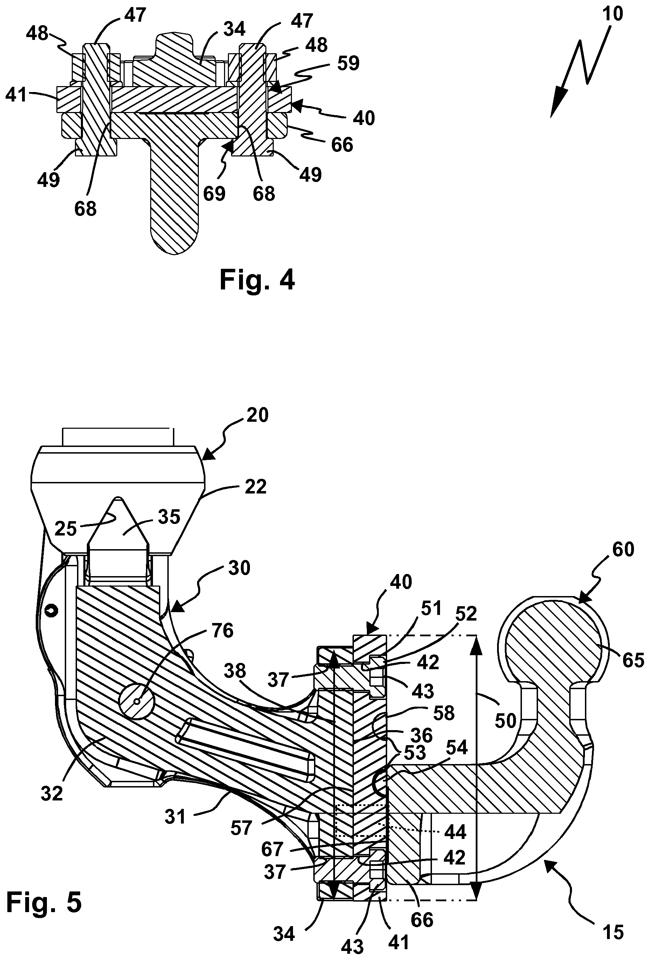

- Figur 4: einen Schnitt durch die Anhängekupplung gemäß Figur 2 entlang einer Schnittlinie B-B,
- Figur 5: einen weiteren Querschnitt durch die Anhängekupplung gemäß Figur 2, etwa entlang einer Schnittlinie C-C,
- Figur 6: eine Seitenansicht der erfindungsgemäßen Anhängekupplung, von der in
- Figur 7: eine Schnittdarstellung entlang einer Schnittlinie D-D in Figur 6 dargestellt ist,
- Figur 8: eine Alternative zu der Anhängekupplung gemäß Figur 1 mit einer Steckaufnahme für beispielsweise einen Lastenträger oder einen Kupplungsarm und
- Figur 9: ein in die Steckaufnahme der Anhängekupplung gemäß Figur 8 eingestecktes Kupplungsteil.

An einem Kraftfahrzeug 11 ist eine Anhängekupplung 10 beispielsweise anhand einer Trägeranordnung 12 befestigt. Die Trägeranordnung 12 umfasst beispielsweise einen Querträger 13, der sich quer zur Fahrzeuglängsrichtung des Kraftfahrzeugs 11 am Heck oder hinter dem Heck 14 des Kraftfahrzeugs 11 erstreckt. An dem Querträger 13 ist ein Halter 20 angeordnet, der mit dem Querträger 13 beispielsweise verschraubt, verschweißt oder in sonstiger Weise fest verbunden ist. Der Querträger 13 ist beispielsweise mittels nicht dargestellter Seitenträger oder Befestigungskonsolen am Kraftfahrzeug 11, insbesondere dessen Karosserie, befestigt, beispielweise mit diesem verschraubt.

Der Querträger 13, insbesondere in Kombination mit den Seitenträgern und/oder Befestigungskonsolen, und die Trägeranordnung 12 können Bestandteile der erfindungsgemäßen Anhängekupplung 10 bilden.

Der Halter 20 dient zum Halten eines Kupplungsarms 15, der lösbar am Halter 20 befestigbar ist. Beispielsweise hat der Halter 20 einen Rohrkörper 21, an dessen Aufnahmeende 22 eine Einführöffnung 23 einer Steckaufnahme 24 vorgesehen ist. In die Steckaufnahme 24 kann der Kupplungsarm 15 mit einem Steckvorsprung 33 eingesteckt werden.

Der fahrzeugseitige Halter 20 ist vorteilhaft hinter einem Stoßfänger 16 des Kraftfahrzeugs 11 verborgen. Der Kupplungsarm 15 steht in den freien Bereich hinter das Heck 14 bzw. den Stoßfänger 16 vor, sodass ein Anhänger angekuppelt oder ein Lastenträger auf dem Kupplungsarm 15 montiert werden kann.

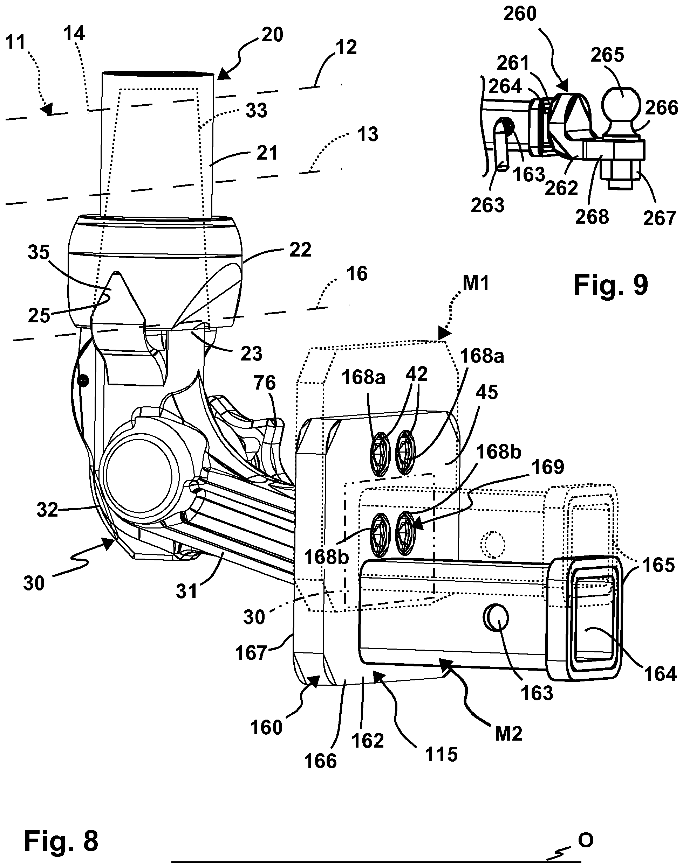

Der Kupplungsarm 15 ist zweiteilig, wobei er ein Halterteil 30 zur Befestigung am fahrzeugseitigen Halter 20 sowie ein Kupplungsteil 60 mit einem Kuppelelement 65, zum Beispiel einer Kupplungskugel, zum Ankuppeln eines Anhängers oder Lastenträgers aufweist. Als Kuppelelement 65 könnte aber in einer anderen Ausgestaltung auch eine Steckaufnahme oder ein Steckvorsprung zum Anstecken eines Lastenträgers vorgesehen sein, beispielsweise entsprechend Figur 8.

Das Halterteil 30 hat neben seinem Steckvorsprung 33 jeweils seitlich Formschlusskonturen 35, beispielsweise keilförmige Formschlussvorsprünge, zum Eingriff in korrespondierende Formschlusskonturen 25 des Halters 20, z.B. Formschlussaufnahmen. Die Formschlusskonturen 25 sind zu den Formschlusskonturen 35 passend, also hier auch keilförmig ausgestaltet. Beispielsweise befinden sich die Formschlusskonturen 25 direkt neben der Einführöffnung 23. Somit wird das Halterteil 30 verdrehsicher am Halter 20 gehalten.

Zur Verriegelung des Halterteils 30 am Halter 20 dient eine Verriegelungseinrichtung 70. Die Verriegelungseinrichtung 70 umfasst mindestens einen, vorzugsweise zwei oder drei Verriegelungskörper 71, beispielsweise Kugeln oder sonstige Formschlusselemente. Die Verriegelungskörper 71 greifen in eine Verriegelungsaufnahme oder mehrere Verriegelungsaufnahmen 72 am Halter 20 ein. Die Verriegelungsaufnahme oder Verriegelungsaufnahmen 72 sind an einem Haltekörper 86 vorgesehen, der in einer Aufnahme 26 des Halters 20 aufgenommen ist. Selbstverständlich können die Verriegelungsaufnahmen 72 und die Verriegelungsaufnahme 72 auch unmittelbar am Halter 20 vorgesehen sein.

Die Verriegelungskörper 71 sind beweglich an dem Halterteil 30 gelagert, beispielsweise in Führungen 88 aufgenommen. Die Verriegelungskörper 71 können in den Führungen 88, die sich radial von einem Kanal 87 weg erstrecken, durch einen Betätigungskörper 73 nach radial außen in Richtung der Verriegelungsaufnahme 72, beispielsweise einer Rinne, verdrängt werden, um das Halterteil 30 am Halter 20 zu verriegeln.

Der Betätigungskörper 73 ist beispielsweise an einem Längsende eines Bolzenelements 74 angebracht, das am anderen Längsendbereich einen Zahnstangenabschnitt 75 aufweist. Das Bolzenelement 74 ist in dem Kanal 87 längsverschieblich aufgenommen. Beispielsweise ist der Zahnstangenabschnitt 75 durch ein Ritzel 76 betätigbar. Das Ritzel 76 kann anhand eines Handgriffelements 77, z.B. eines Handrads, verdreht werden, um somit den Betätigungskörper 73 in Richtung einer Lösestellung L, in welcher die Verriegelungskörper 71 nicht in die Verriegelungsaufnahme 72 eingreifen, oder der Verriegelungsstellung R, in welcher die Verriegelungskörper 71 in die Verriegelungsaufnahme 72 eingreifen, verstellt werden. Die Verriegelungsstellung R ist nur in Bezug auf den Betätigungskörper 73, der in diesem Fall weiter vom Ritzel 76 weg verstellt ist, in der Zeichnung dargestellt.

Allerdings ist die Verriegelungseinrichtung 70 nur in Richtung der Lösestellung L aktiv zu betätigen, während in Richtung der Verriegelungsstellung R eine Federanordnung mit einer Feder 78 wirkt. Diese stützt sich einerseits an einer Stufe 79 im Kanal 87 ab, andererseits am Betätigungskörper 73, sodass dieser in Richtung der Verriegelungsstellung R federbelastet ist.

In der Lösestellung L kann die Verriegelungseinrichtung 70 anhand einer Sicherungseinrichtung 80 gehalten werden, die beispielsweise einen Betätigungshebel 82 aufweist. Der Betätigungshebel 82 betätigt einen Sicherungsstift 81, der in eine Sicherungsaufnahme 85 am Bolzenelement 74 eingreift, wenn dieses in Richtung der Lösestellung L verstellt ist. Der Betätigungshebel 82 ist durch eine Feder 84, die auf einen Hebelarm des Betätigungshebels 82 wirkt, in Richtung der Sicherungsstellung bzw. der Eingriffstellung des Sicherungsstifts 81 in die Sicherungsaufnahme 85 federbelastet. Wenn das Halterteil 30 in den Halter 20 eingesteckt wird, löst der Betätigungshebel 82 aus, indem er nämlich an den Halter 20 anschlägt. Dabei verlagert er den Sicherungsstift 81 aus der Sicherungsaufnahme 85 heraus, sodass die Feder 78 den Betätigungskörper 70 in Richtung der Verriegelungsstellung R betätigen kann und dieser somit die Verriegelungskörper 71 in die Verriegelungsaufnahme (en) 72 hinein verstellt.

Das Halterteil 30 weist einen Armabschnitt 31 auf, der über einen Krümmungsabschnitt 32 mit dem Steckvorsprung 33 verbunden ist. Im Bereich des Krümmungsabschnitts 32 ist beispielsweise das Handrad oder das Handgriffelement 77 angeordnet.

Am freien Endbereich des Armabschnitts 31 befindet sich ein Stützabschnitt 34, der eine stirnseitige Stützfläche 36 bereitstellt. An dem Stützabschnitt 34, insbesondere im Bereich der Stützflächen 36, sind Schraubaufnahmen 37 vorgesehen, die zum Anschrauben eines ersten Flanschteils 40 vorgesehen sind.

Das Flanschteil 40 ist als ein Plattenkörper 41 ausgestaltet.

Das Flanschteil 40 weist einander entgegengesetzte Stützflächen 57, 58 auf. Die Stützfläche 57 stützt sich an der Stützfläche 36 des Halterteils 30 ab, während die entgegengesetzte Stützfläche 58 zum Abstützen des Kupplungsteils 60 dient.

Das Kupplungsteil 60 weist einen Armkörper 61 auf. An einem Armabschnitt 62 des Armkörpers 62 ist ein zweites Flanschteil 66 ausgebildet, an dem eine Stützfläche 67 zur Abstützung an der Stützfläche 58 des ersten Flanschteils 40 vorgesehen ist.

Der Armabschnitt 62 ist beim Ausführungsbeispiel vergleichsweise kurz, könnte aber beispielsweise dazu, dass er weiter vor den Stoßfänger 16 vorsteht oder günstig am Stoßfänger 16 vorbei orientiert ist, länger sein, weitere Krümmungen aufweisen oder dergleichen. Beim Kupplungsteil 60 ist ein einziger Krümmungsabschnitt 64 vorgesehen, an dessen freiem Endbereich 63 das Kuppelelement 65 angeordnet ist.

Die mehrteilige Ausgestaltung des Kupplungsarms 15 ermöglicht es, dass das Kuppelelement 65 unterschiedliche Abstände zu einer Fahrbahnoberfläche O aufweisen kann.

An dem zweiten Flanschteil 66 sind Schraubaufnahmen 68 einer zweiten Schraubanordnung 69 angeordnet, die zu Schraubaufnahmen 45, 44 einer ersten Schraubanordnung 59 am ersten Flanschteil 40 passen bzw. mit diesen Schraubaufnahmen 44, 45 fluchten, wenn das zweite Flanschteil 66 an dem ersten Flanschteil 40 in einer Montagelängsposition M1 oder einer Montagelängsposition M2 montiert ist. Die Schraubaufnahmen 44 sind dabei der unteren Montagelängsposition M2, die Schraubaufnahmen 45 der oberen Montagelängsposition M1 zugeordnet.

Die Stützfläche 58 hat eine solche Längsausdehnung bzw. Längserstreckung 50, dass die Stützfläche 67 des zweiten Flanschteils 66 in beiden Montagelängspositionen M1 und M2 jeweils vollflächig auf der Stützfläche 58 des ersten Flanschteils 40 aufliegt. Somit ist das Kupplungsteil 60 stets optimal am Halterteil 30, zumindest über das Flanschteil 40, abgestützt.

Wenn die Schraubaufnahmen 68 in der Montagelängsposition M2 mit den Schraubaufnahmen 44 fluchten, können Schrauben 47 durch die Schraubaufnahmen 68, 44 durchgesteckt werden, während in der Montagelängsposition M1 die Schraubaufnahmen 45 mit den Schraubaufnahmen 68 fluchten und somit die Schrauben 47 dann durch die Paarung der Schraubaufnahmen 68, 45 hindurch gesteckt werden kann. In beiden Montagelängspositionen M1 und M2 können die Schrauben 47 dann mit Muttern 48 verschraubt werden, sodass sich einerseits die Schraubenköpfe 49 der Schrauben 47 an einer der Stützfläche 67 entgegengesetzten Fläche des zweiten Flanschteils 66 und andererseits die Muttern 48 an der der Stützfläche 58 entgegengesetzten Fläche, vorliegend der Stützfläche 57, des ersten Flanschteils 40 abstützen können.

Das erste Flanschteil 40 kann dazu vorgesehen sein, in nur einer einzigen Montageposition am Halterteil 30 befestigt zu werden. Dann sind beispielsweise Schrauben 43 durch Schraubaufnahmen 42 des Flanschteils 40 durchgesteckt und stützen sich in den Schraubaufnahmen 42 an einer Stufe ab. Die Schrauben 43 sind in Schraubaufnahmen 37 an der Stützfläche 36 des Halterteils 30 eingeschraubt. Die vorgenannte Stufe der Schraubaufnahmen 42 ist beispielsweise zwischen einer Vertiefung 51, in welche die Köpfe 52 der Schrauben 43 eintauchen können, und einem Schraubenkanal, in den die Bolzenabschnitte der Schrauben 43 eingreifen, gebildet. Zweckmäßigerweise stehen die Köpfe 52 der Schrauben 43 nicht vor die Stützfläche 58 vor, sodass sie die Montage des Kupplungsteils 60 am ersten Flanschteil 40 nicht behindern.

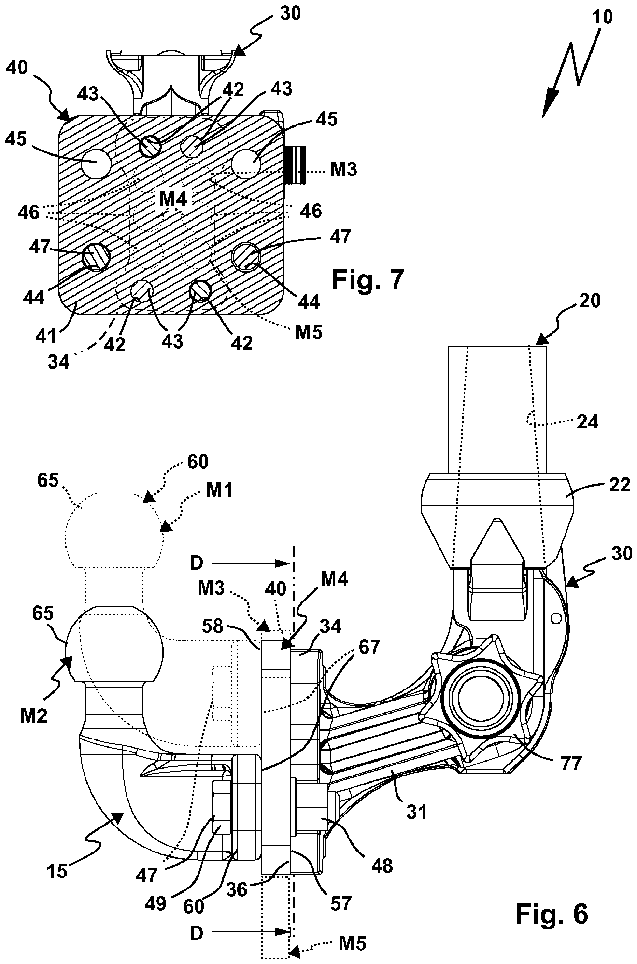

Eine Variante zur Montage des ersten Flanschteils 40 am Stützabschnitt 34 ist in Figur 7 angedeutet. Beispielsweise kann vorgesehen sein, dass das erste Flanschteil 40 am Stützabschnitt 34 in drei verschiedenen Montagelängspositionen M3, M4 oder M5 montierbar ist, wozu dann weitere Schraubaufnahmen 46 (zusätzlich zu den Schraubaufnahmen 42 oder alternativ dazu) vorgesehen sein können. Selbstverständlich kann auch am Stützabschnitt 34 eine Anordnung von weiteren, zusätzlich zu den Schraubaufnahmen 37 vorgesehenen Schraubaufnahmen vorgesehen sein, um das Flanschteil 40 in unterschiedlichen Montagelängspositionen am Stützabschnitt 34 befestigen zu können.

Eine Längserstreckung 38 des Stützabschnitts 34 bzw. der Stützfläche 36 ist vorzugsweise so bemessen, dass das erste Flanschteil 40 mit seiner Stützfläche 57 möglichst vollflächig, vorzugsweise im Wesentlichen ganz abgestützt an der Stützfläche 36 ist.

Die Stützflächen 36, 57, 58, 67 sind vorzugsweise Planflächen, sodass sie sich vollflächig aneinander abstützen können. Es können aber auch die Stützflächen umgebende oder an den Stützflächen angeordnete Formschlusskonturen vorgesehen sein, so zum Beispiel Formschlusskonturen 54 an der Stützfläche 67, die zum Eingriff in Formschlusskonturen 53 an der Stützfläche 58 vorgesehen sind. Beispielsweise handelt es sich bei den Formschlusskonturen 54 um Formschlussvorsprünge, bei den Formschlusskonturen 53 um Formschlussaufnahmen. Insbesondere sind die Formschlusskonturen 53, 54 kugelig.

Die Formschlusskonturen 53, 54 können als Montagehilfe dienen, um das Kupplungsteil 60 am Flanschteil 40 bequem in den unterschiedlichen Montagelängspositionen M1 oder M2 verschrauben zu können. Vorzugsweise sind beiden Montagelängspositionen M1 und M2 jeweils Formschlusskonturen 53 zugeordnet, sodass die Formschlusskontur 54 in jeder dieser Montagelängspositionen jeweils in eine Formschlusskontur 53 eingreifen kann. Die Formschlusskonturen 53, 54 können aber auch dazu dienen, zusätzlich zu der Verschraubung das Kupplungsteil 60 optimal am Flanschteil 40 abzustützen.

Alternativ und in der Zeichnung nicht dargestellt kann beispielsweise auch vorgesehen sein, dass anstelle der Schraubaufnahmen 37 des Halterteils 30 feststehende Bolzenvorsprünge vorgesehen sind, die beispielsweise in die Schraubaufnahmen 42 eingreifen können und dort verschraubbar sind, beispielsweise mit einer Mutter, die beispielsweise in die Vertiefung 51 hineinpassen kann, dort wo in der Zeichnung der Schraubenkopf 49 dargestellt ist.

Selbstverständlich können auch an anderer Stelle feststehende Schraubbolzen vorgesehen sein, so zum Beispiel vom Kupplungsteil 60 bzw. dem zweiten Flanschteil 66 abstehende Schraubbolzen oder Bolzenabschnitte zum Eingriff in die Schraubaufnahmen 44 oder 45.

Bei dem in Figur 8 dargestellten Ausführungsbeispiel ist an einem Kupplungsarm 115 als ein Kuppelelement 165 eine Steckaufnahme 164 vorgesehen. Am Halterteil 30 ist zu diesem Zweck anstelle des Kupplungsteils 60 ein Kupplungsteil 160 befestigt.

Das Kuppelelement 165 ist beispielsweise durch einen Rohrkörper gebildet oder weist einen solchen auf. Beispielsweise kann ein Lastenträger oder auch ein Kuppelstück, an dessen freiem Ende eine Kupplungskugel angeordnet ist, in die Steckaufnahme 164 eingesteckt und dort verriegelt werden. Beispielsweise ist dazu ein Verriegelungselement 263 in eine Verriegelungsaufnahme 163 einzustecken, das dann gleichzeitig das Kuppelstück oder das in die Steckaufnahme 164 eingesteckte Steckende des Lastenträgers durchdringt. Beispielsweise kann als ein Verriegelungselement ein Verriegelungsbolzen, ein Sicherungsstift verwendet werden.

Es ist beispielsweise möglich, in die Steckaufnahme 164 ein Kupplungsteil 260 einzustecken (Figur 9). Das Kupplungsteil 260 weist beispielsweise einen Steckabschnitt 264 auf, der in die Steckaufnahme 164 einsteckbar ist. Der Steckabschnitt 264 wird beispielsweise von einem Armkörper 261 gebildet, an dessen freiem Endbereich, also demjenigen Abschnitt, der vor die Steckaufnahme 164 vorsteht, ein Kupplungshalter 262 angeordnet ist. Dort könnte auch direkt ein Kuppelelement, zum Beispiel eine Kupplungskugel vorgesehen sein.

Der Kupplungshalter 262 weist beispielsweise einen Halteabschnitt 268 auf, durch den ein Bolzenabschnitt 266, der ein Kuppelelement 265 (beispielsweise eine Kupplungskugel) trägt, durchgesteckt ist. Dazu ist eine in der Zeichnung nicht dargestellte Durchstecköffnung am Halteabschnitt 268 vorgesehen. Auf den Bolzenabschnitt 266 ist eine Mutter oder ein sonstiges Sicherungselement 267 aufgeschraubt, sodass der Halteabschnitt 268 zwischen dem Kuppelelement 265 und dem Sicherungselement 267 sandwichartig verspannt ist.

Das Kupplungsteil 160 weist als ein zweites Flanschteil 166 eine Flanschplatte 162 auf, an welcher Schraubaufnahmen 168a und 168b einer zweiten Schraubanordnung 169 vorgesehen sind. Durch diese Schraubaufnahmen 168a und 168b können Schrauben 42 durchgesteckt und mit dem in diesem Fall ein erstes Flanschteil bildenden Stützabschnitt 34 des Halterteils 30 verschraubt werden. Eine Stützfläche 167 der Flanschplatte 162 liegt dann an der Stützfläche 36 des Halterteils 30 flächig an.

Die Schrauben 42 werden beispielsweise in die Schraubaufnahmen 37 des hier ein erstes Flanschteil bildendes Halterteil 30 eingeschraubt (das Halterteil 30 ist nur schematisch angedeutet). Die Schraubaufnahmen 168b sind einer unteren Montageposition M2 und die Schraubaufnahmen 168a einer oberen Montageposition M1 des Kupplungsteils 160 an dem Halterteil 30 zugeordnet. In der unteren Montageposition M2 durchdringen die Schrauben 42 also die Schraubaufnahmen 168b und sind in die Schraubaufnahmen 37 eingeschraubt, während in der oberen Montageposition M1 die Schrauben 42 durch die Schraubaufnahmen 168a durchgesteckt und die die Schraubaufnahmen 37 eingeschraubt sind. Mithin ist es auf diesem Wege möglich, auch die Steckaufnahme 164 in unterschiedlichen Abständen zur Fahrbahnoberfläche O am Halterteil 30 zu montieren und somit beispielsweise eine optimale Adaption des Kupplungsarms 115 an einem Betrieb als Anhängekupplung für einen Anhänger oder an einen Betrieb mit Lastenträger zu gewährleisten.

## Patentansprüche

1. Anhängekupplung für ein Kraftfahrzeug (11), insbesondere einen Personenkraftwagen, mit einem an dem Kraftfahrzeug (11) angeordneten oder befestigbaren Halter (20) und einem an dem Halter (20) lösbar befestigbaren Kupplungsarm (15), wobei der Kupplungsarm (15) ein Halterteil (30) mit einem Steckvorsprung (33) zum Einstecken in eine Steckaufnahme (24) des Halters (20) und ein Kupplungsteil (60) mit einem Kuppelelement (65), insbesondere einer Kupplungskugel, zum Ankuppeln eines Lastenträgers oder eines Anhängers aufweist, wobei das Halterteil (30) und das Kupplungsteil (60) anhand von Flanschteilen (40, 66) miteinander verbunden sind, die lösbar miteinander verschraubt sind und im montierten Zustand miteinander zugewandten stirnseitigen Stützflächen (58, 67) aneinander anliegen, wobei der Steckvorsprung (33) des Halterteils (30) in der Steckaufnahme (24) des Halters (20) anhand einer Verriegelungseinrichtung (70) lösbar verriegelbar ist, wobei zur Einstellung unterschiedlicher Abstände des Kuppelelements (65) zu einer Fahrbahnoberfläche (O) die Stützfläche (58) mindestens eines ein erstes Flanschteil (40) bildenden Flanschteils eine derartige Längserstreckung (50) aufweist, wobei die Stützfläche (67) des anderen, ein zweites Flanschteil (66) bildenden Flanschteils in einer ersten und mindestens einer davon verschiedenen zweiten Montagelängsposition (M1, M2) bezüglich der Längserstreckung (50) der Stützfläche (58) des ersten Flanschteils (40) an dem ersten Flanschteil (40) lösbar montierbar ist, und wobei das erste Flanschteil (40) im Bereich seiner Stützfläche (58) eine erste Schraubanordnung (59) von Schrauben und/oder Schraubaufnahmen aufweist, zu der eine zweite Schraubanordnung (69) von Schrauben und/oder Schraubaufnahmen im Bereich der Stützfläche (67) des zweiten Flanschteils (66) in der ersten und der mindestens einen zweiten Montagelängsposition (M1, M2) passt, wobei mindestens eines der Flanschteile (40, 66) mit dem Halterteil (30) und dem Kupplungsteil (60) lösbar verbindbar ist, **dadurch gekennzeichnet, dass** das lösbare Flanschteil (40) als eine Adapterplatte ausgestaltet ist, die zur Adaption des Halterteils (30) und des Kupplungsteils (60) aneinander ausgestaltet ist und mit beiden Teilen, dem Halterteil (30) und dem Kupplungsteil (60), lösbar verbindbar ist.

2. Anhängekupplung nach Anspruch 1, **dadurch gekennzeichnet, dass** das lösbare Flanschteil (40, 66) am Halterteil (30) und am Kupplungsteil (60) anhand einer Verschraubung, insbesondere anhand mindestens einer Schraube, befestigt ist.

3. Anhängekupplung nach Anspruch 1 oder 2, **dadurch gekennzeichnet, dass** das lösbare Flanschteil (40,66) die erste Schraubanordnung (59), insbesondere ein erstes Lochbild, zur Verbindung mit der zweiten Schraubanordnung (69) sowie eine Schrauben und/oder Schraubaufnahmen, insbesondere ein von dem ersten Lochbild verschiedenes drittes Lochbild, aufweisende Schraubanordnung zur Verbindung mit dem Halterteil (30) oder dem Kupplungsteil (60) aufweist.

4. Anhängekupplung nach einem der vorhergehenden Ansprüche, **dadurch gekennzeichnet, dass** das lösbare Flanschteil (40) die erste Schraubanordnung (59) zur Verbindung mit der zweiten Schraubanordnung (69) aufweist.

5. Anhängekupplung nach einem der vorhergehenden Ansprüche, **dadurch gekennzeichnet, dass** das Kupplungsteil (60) oder das Halterteil (30) einen, insbesondere flanschartigen und/oder eine Planfläche aufweisenden, Stützabschnitt (34) zur Befestigung des lösbaren, insbesondere des ersten, Flanschteils (40) aufweist.

6. Anhängekupplung nach Anspruch 5, **dadurch gekennzeichnet, dass** zur Einstellung unterschiedlicher Abstände des Kuppelelements (65) zu der Fahrbahnoberfläche (O) das lösbare Flanschteil (40) an dem Stützabschnitt (34) in mindestens zwei voneinander verschiedenen Montagelängspositionen (M3, M4, M5) montierbar ist, wobei am Stützabschnitt (34) und/oder lösbaren Flanschteil (40) eine Schraubanordnung von Schrauben und/oder Schraubaufnahmen (42, 46) zur Verschraubung des jeweils anderen Teils von Stützabschnitt (34) oder Flanschteil (40) in den mindestens zwei voneinander verschiedenen Montagelängspositionen (M3, M4, M5) vorgesehen ist.

7. Anhängekupplung nach einem der vorhergehenden Ansprüche, **dadurch gekennzeichnet, dass** die Stützfläche (58) des ersten Flanschteils (40) und/oder die Stützfläche (67) des zweiten Flanschteils (66) als Planfläche ausgestaltet ist oder eine Planfläche aufweist und/oder die Stützfläche (58) des ersten Flanschteils (40) und/oder die Stützfläche (67) des zweiten Flanschteils (66) eine Stufe oder Rippe und/oder eine Wölbung aufweist und/oder dass mindestens eines der Flanschteile (40, 66) als ein Plattenkörper ausgebildet ist.

8. Anhängekupplung nach einem der vorhergehenden Ansprüche, **dadurch gekennzeichnet, dass** die Stützfläche (58) des ersten Flanschteils (40) und/oder die Stützfläche (67) des zweiten Flanschteils (66) eine Formschlusskontur (53, 54), insbesondere zur Abstützung der Stützfläche (58, 67) des jeweiligen anderen Flanschteils (40, 66) oder eines an der Stützfläche (58, 67) des anderen Flanschteils (40, 66) angeordneten Stützkörpers, aufweist.

9. Anhängekupplung nach Anspruch 8, **dadurch gekennzeichnet, dass** die Stützflächen (58, 67) des ersten Flanschteils (40) und die Stützfläche (67) des zweiten Flanschteils (66) ineinander passende, korrespondierende Formschlusskonturen (53, 54) aufweisen und/oder dass an der Stützfläche (58, 67) eines Flanschteils (40, 66) eine Aussparung zum freien Eingriff einer Formschlusskontur (53, 54) des anderen Flanschteils (40, 66) vorgesehen ist.

10. Anhängekupplung nach Anspruch 8 oder 9, **dadurch gekennzeichnet, dass** das erste Flanschteil (40) der ersten und der mindestens einen zweiten Montagelängsposition (M1, M2) zugeordnete Formschlusskonturen (53) aufweist, sodass mindestens eine Formschlusskontur (54) des zweiten Flanschteils (66) in der jeweiligen Montagelängsposition (M1, M2) in eine Formschlusskontur (53) des ersten Flanschteils (40) passt.

11. Anhängekupplung nach einem der vorhergehenden Ansprüche, **dadurch gekennzeichnet, dass** mindestens eines der Flanschteile (40, 66) einen integralen Bestandteil des Halterteils (30) oder des Kupplungsteils (60) bildet.

12. Anhängekupplung nach einem der vorhergehenden Ansprüche, **dadurch gekennzeichnet, dass** sich die Stützfläche (58) des ersten Flanschteils (40) im am Kraftfahrzeug (11) montierten Zustand der Anhängekupplung im Wesentlichen vertikal erstreckt und/oder dass die Flanschteile (40, 66) etwa längsmittig und/oder zwischen Krümmungsabschnitten (32, 64) des Kupplungsarms (15) angeordnet sind und/oder dass im am Kraftfahrzeug (11) montierten Zustand der Anhängekupplung (10) mindestens eines, vorzugsweise beide Flanschteile (40, 66) in einem Zwischenraum zwischen Stoßfänger (16) und Karosserie des Kraftfahrzeugs (11) verborgen sind und/oder beide Flanschteile (40, 66) in einem freien Bereich zwischen dem Kuppelelement (65) des Kupplungsteils (60) und dem Stoßfänger (16) des Kraftfahrzeugs (11) angeordnet sind.

13. Anhängekupplung nach einem der vorhergehenden Ansprüche, **dadurch gekennzeichnet, dass** die erste Schraubanordnung (59) ein erstes Lochbild von Schraubaufnahmen zum Einschrauben oder Durchstecken von Schrauben aufweist, mit dem Durchstecköffnungen oder Schraubvorsprünge der zweiten Schraubanordnung (69) in der ersten und der mindestens einen zweiten Montagelängsposition (M1, M2) fluchten.

14. Anhängekupplung nach einem der vorhergehenden Ansprüche, **dadurch gekennzeichnet, dass** am Halterteil (30) im Bereich des Steckvorsprungs (33) mindestens eine Formschlusskontur (35), insbesondere ein Formschlussvorsprung, zum Eingriff in eine am fahrzeugseitigen Halter (20) angeordnete Formschlusskontur (45), insbesondere eine Formschlussaufnahme, angeordnet ist und/oder dass die Verriegelungseinrichtung (70) mindestens eine Verriegelungsaufnahme (72) im Bereich der Steckaufnahme (24) des fahrzeugseitigen Halters (20) und mindestens einen Verriegelungskörper (71), insbesondere eine Kugel, im Bereich des Steckvorsprungs (33) des Halterteils (30) aufweist, wobei der mindestens eine Verriegelungskörper (71) durch einen Betätigungskörper (73) zwischen einer in die mindestens eine Verriegelungsaufnahme (72) formschlüssig eingreifenden Verriegelungsstellung und einer aus der Verriegelungsaufnahme (72) herausbewegten Lösestellung verstellbar ist, wobei zweckmäßigerweise vorgesehen ist, dass der Betätigungskörper (73) in einem Innenraum des Halterteils (30) verschieblich, insbesondere längsverschieblich, beweglich gelagert ist, wobei der mindestens eine Verriegelungskörper (71) durch eine Verschiebung des Betätigungskörpers (73) zwischen der Lösestellung und der Verriegelungsstellung verstellbar ist.

15. Anhängekupplung nach einem der vorhergehenden Ansprüche, **dadurch gekennzeichnet, dass** die Stützfläche des ersten Flanschteils (40) eine solche Ausdehnung hat, dass die Stützfläche (67) des zweiten Flanschteils (66) in mindestens zwei, vorzugsweise in jeder der Montagelängspositionen (M1, M2), vollflächig oder im Wesentlichen vollflächig auf der Stützfläche des ersten Flanschteils (40) aufliegt.

## Claims

1. Trailer coupling for a motor vehicle (11), in particular a car, with a holder (20) mounted on or attachable to the motor vehicle (11) and a coupling arm (15) attachable releasably to the holder (20), wherein the coupling arm (15) has a holding part (30) with a plug-in projection (33) for insertion in a plug-in socket (24) of the holder (20) and a coupling part (60) with a coupling element (65), in particular a coupling ball, for coupling on a load carrier or a trailer, wherein the holding part (30) and the coupling part (60) are connected to one another with the aid of flange parts (40, 66) which are screwed releasably together and in the assembled state abut one another with facing end face support surfaces (58, 67), wherein the plug-in projection (33) of the holding part (30) is releasably locked in the plug-in socket (24) of the holder (20) with the aid of a locking device (70) wherein, for the setting of different clearances of the coupling element (65) from a road surface (O) the support surface (58) has such a longitudinal extent (50) of at least one flange part forming a first flange part (40), wherein the support surface (67) of the flange part forming the second flange part (66) may be mounted releasably on the first flange part (40) in a first and at least one different second longitudinal mounting position (M1, M2) relative to the longitudinal extent (50) of the support surface (58) of the first flange part (40), and wherein the first flange part (40) has in the area of its support surface (58) a first screw assembly (59) of screws and/or screw sockets, which is matched by a second screw assembly (69) of screws and/or screw sockets in the area of the support surface (67) of the second flange part (66) in the first and second longitudinal mounting position or positions (M1, M2), wherein at least one of the flange parts (40, 66) may be releasably connected to the holding part (30) and the coupling part (60), **characterised in that**
the releasable flange part (40) is in the form of an adapter plate which is designed for the adaptation of the holding part (30) and the coupling part (60) to one another and may be connected releasably to both parts, the holding part (30) and the coupling part (60).

2. Trailer coupling according to claim 1, **characterised in that** the releasable flange part (40, 66) is fastened to the holding part (30) and the coupling part (60) with the aid of a screw connection, in particular with the aid of at least one screw.

3. Trailer coupling according to claim 1 or 2, **characterised in that** the releasable flange part (40, 66) has the first screw assembly (59), in particular a first hole pattern, for connection with the second screw assembly (69) together with a screw assembly having screws and/or screw sockets, in particular a third hole pattern differing from the first hole pattern, for connection with the holding part (30) or the coupling part (60).

4. Trailer coupling according to any of the preceding claims, **characterised in that** the releasable flange part (40) has the first screw assembly (59) for connection with the second screw assembly (69).

5. Trailer coupling according to any of the preceding claims, **characterised in that** the coupling part (60) or the holding part (30) have a support section (34), in particular flange-like and/or having a plane surface, for attaching the releasable, in particular the first, flange part (40).

6. Trailer coupling according to claim 5, **characterised in that**, for the setting of different clearances of the coupling element (65) from the road surface (O), the releasable flange part (40) may be mounted on the support section (34) in at least two different longitudinal mounting positions (M3, M4, M5), wherein there is provided on the support section (34) and/or releasable flange part (40) a screw assembly of screws and/or screw sockets (42, 46) for screw connection of the respective other part, support section (34) or flange part (40), in the two or more different longitudinal mounting positions (M3, M4, M5).

7. Trailer coupling according to any of the preceding claims, **characterised in that** the support surface (58) of the first flange part (40) and/or the support surface (67) of the second flange part (66) are or is designed as or have a plane surface, and/or the support surface (58) of the first flange part (40) and/or the support surface (67) of the second flange part (66) have or has a step or rib and/or a bulge, and/or that at least one of the flange parts (40, 66) is in the form of a plate body.

8. Trailer coupling according to any of the preceding claims, **characterised in that** the support surface (58) of the first flange part (40) and/or the support surface (67) of the second flange part (66) have or has an interlocking contour (53, 54), in particular for support of the support surface (58, 67) of the respective other flange part (40, 66), or a support body located on the support surface (58, 67) of the other flange part (40, 66).

9. Trailer coupling according to claim 8, **characterised in that** the support surfaces (58, 67) of the first flange part (40) and the support surface (67) of the second flange part (66) have corresponding interlocking contours (53, 54) which fit into one another, and/or that there is provided on the support surface (58, 67) of one flange part (40, 66) a recess for free engagement of an interlocking contour (53, 54) of the other flange part (40, 66).

10. Trailer coupling according to claim 8 or 9, **characterised in that** the first flange part (40) has interlocking contours (53) assigned to the first and the second or more longitudinal mounting positions (M1, M2), so that at least one interlocking contour (54) of the second flange part (66) fits into an interlocking contour (53) of the first flange part (40) in the respective longitudinal mounting position (M1, M2).

11. Trailer coupling according to any of the preceding claims, **characterised in that** at least one of the flange parts (40, 66) forms an integral part of the holding part (30) or the coupling part (60).

12. Trailer coupling according to any of the preceding claims, **characterised in that** the support surface (58) of the first flange part (40), when the trailer coupling is mounted on the motor vehicle (11), extends substantially vertically and/or that the flange parts (40, 66) are arranged roughly in the longitudinal centre and/or between curved sections (32, 64) of the coupling arm (15) and/or that, with the trailer coupling (10) mounted on the motor vehicle (11), preferably both flange parts (40, 66) are concealed in a space between the bumper (16) and the body of the motor vehicle (11) and/or both flange parts (40, 66) are arranged in a free area between the coupling element (65) of the coupling part (60) and the bumper (16) of the motor vehicle (11).

13. Trailer coupling according to any of the preceding claims, **characterised in that** the first screw assembly (59) has a first hole pattern of screw sockets for the screwing in or insertion of screws, which aligns with insertion holes or screw projections of the second screw assembly (69) in the first and the second longitudinal mounting position or positions (M1, M2).

14. Trailer coupling according to any of the preceding claims, **characterised in that** there is provided on the holding part (30) in the area of the plug-in projection (33) at least one interlocking contour (35), in particular an interlocking projection, for engagement in an interlocking contour (45), in particular an interlocking location, provided on the vehicle-side holder (20), and/or that the locking device (70) has at least one locking location (72) in the area of the plug-in socket (24) of the vehicle-side holder (20) and at least one locking body (71), in particular a ball, in the area of the plug-in projection (33) of the holding part (30), wherein the locking body or bodies (71) may be adjusted by an actuating body (73) between a locked position positively engaging in the locking location or locations (72) and a release position moved out of the locking location (72), wherein expediently it is provided that the actuating body (73) is movably mounted, movable in particular longitudinally in an interior of the holding part (30), wherein the locking body or bodies (71) may be adjusted by a movement of the actuating body (73) between the release position and the locked position.

15. Trailer coupling according to any of the preceding claims, **characterised in that** the support surface of the first flange part (40) has such an extent that the support surface (67) of the second flange part (66) in at least two, preferably in each, of the longitudinal mounting positions (M1, M2), lies completely or substantially completely on the support surface of the first flange part (40).

## Revendications

1. Attelage de remorque pour un véhicule automobile (11), en particulier un véhicule particulier, avec un système de maintien (20) disposé ou pouvant être fixé au niveau du véhicule automobile (11) et un bras d'attelage (15) pouvant être fixé de manière amovible au niveau du système de maintien (20), dans lequel le bras d'attelage (15) présente une partie de système de maintien (30) avec une partie faisant saillie d'enfichage (33) destinée à être enfichée dans un logement d'enfichage (24) du système de maintien (20) et une partie d'attelage (60) avec un élément d'attelage (65), en particulier une boule d'attelage, servant à accoupler un support de charges ou une remorque, dans lequel la partie de système de maintien (30) et la partie d'attelage (60) sont reliées l'une à l'autre à l'aide de parties de bride (40, 66) qui sont vissées les unes aux autres de manière amovible et reposent, dans l'état monté, les unes au niveau des autres par des faces d'appui (58, 67) côté frontal tournées les unes vers les autres, dans lequel la partie faisant saillie d'enfichage (33) de la partie de système de maintien (30) peut être verrouillée de manière amovible dans le logement d'enfichage (24) du système de maintien (20) à l'aide d'un dispositif de verrouillage (70), dans lequel pour régler des espacements différents entre l'élément d'attelage (65) et une surface de chaussée (O), la face d'appui (58) d'au moins une partie de bride formant une première partie de bride (40) présente une extension longitudinale (50) de ce type, dans lequel la face d'appui (67) de l'autre partie de bride formant une deuxième partie de bride (66) peut être montée de manière amovible au niveau de la première partie de bride (40) dans une première et au moins une deuxième position longitudinale de montage (M1, M2) différente de celle-ci par rapport à l'extension longitudinale (50) de la face d'appui (58) de la première partie de bride (40), et dans lequel la première partie de bride (40) présente dans la zone de sa face d'appui (58) un premier ensemble de vis (59) de vis et/ou de logements de vis, auquel s'adapte un deuxième ensemble de vis (69) de vis et/ou de logements de vis dans la zone de face d'appui (67) de la deuxième partie de bride (66) dans la première et l'au moins une deuxième position longitudinale de montage (M1, M2), dans lequel au moins une des parties de bride (40, 66) peut être reliée de manière amovible à la partie de système de maintien (30) et à la partie d'attelage (60),
**caractérisé en ce que**
la partie de bride (40) amovible est configurée sous la forme d'une plaque d'adaptation qui est configurée aux fins de l'adaptation de la partie de système de maintien (30) et de la partie d'attelage (60) l'une à l'autre et peut être reliée de manière amovible aux deux parties, la partie de système de maintien (30) et la partie d'attelage (60).

2. Attelage de remorque selon la revendication 1, **caractérisé en ce que** la partie de bride (40, 66) amovible est fixée au niveau de la partie de système de maintien (30) et au niveau de la partie d'attelage (60) à l'aide d'un vissage, en particulier à l'aide d'au moins une vis.

3. Attelage de remorque selon la revendication 1 ou 2, **caractérisé en ce que** la partie de bride (40, 66) amovible présente le premier ensemble de vis (59), en particulier un premier gabarit de trou, destiné à être relié au deuxième ensemble de vis (69) ainsi qu'un ensemble de vis présentant des vis et/ou des logements de vis, en particulier un troisième gabarit de trou différent du premier gabarit de trou, destiné à être relié à la partie de système de maintien (30) ou à la partie d'attelage (60).

4. Attelage de remorque selon l'une quelconque des revendications précédentes, **caractérisé en ce que** la partie de bride (40) amovible présente le premier ensemble de vis (59) destiné à être relié au deuxième ensemble de vis (69).

5. Attelage de remorque selon l'une quelconque des revendications précédentes, **caractérisé en ce que** la partie d'attelage (60) ou la partie de système de maintien (30) présente une section d'appui (34), en particulier de type bride et/ou présentant une face plane, servant à fixer la, en particulier première, partie de bride (40) amovible.

6. Attelage de remorque selon la revendication 5, **caractérisé en ce que** pour régler des espacements différents entre l'élément d'attelage (65) et la surface de chaussée (O), la partie de bride (40) amovible peut être montée au niveau de la section d'appui (34) dans au moins deux positions longitudinales de montage (M3, M4, M5) différentes les unes des autres, dans lequel est prévu au niveau de la section d'appui (34) et/ou de la partie de bride (40) amovible, un ensemble de vis de vis et/ou de logements de vis (42, 46), servant à visser l'autre partie respectivement de la section d'appui (34) ou de la partie de bride (40) dans les au moins deux positions longitudinales de montage (M3, M4, M5) différentes les unes des autres.

7. Attelage de remorque selon l'une quelconque des revendications précédentes, **caractérisé en ce que** la face d'appui (58) de la première partie de bride (40) et/ou la face d'appui (67) de la deuxième partie de bride (66) sont configurées sous la forme d'une face plane ou présentent une face plane, et/ou la face d'appui (58) de la première partie de bride (40) et/ou la face d'appui (67) de la deuxième partie de bride (66) présentent un palier ou une nervure et/ou un bombement, et/ou qu'au moins une des parties de bride (40, 66) est réalisée sous la forme d'un corps de plaque.

8. Attelage de remorque selon l'une quelconque des revendications précédentes, **caractérisé en ce que** la face d'appui (58) de la première partie de bride (40) et/ou la face d'appui (67) de la deuxième partie de bride (66) présentent un contour à complémentarité de forme (53, 54), en particulier servant à soutenir la face d'appui (58, 67) de l'autre partie de bride (40, 66) respective ou d'un corps d'appui disposé au niveau de la face d'appui (58, 67) de l'autre partie de bride (40, 66).

9. Attelage de remorque selon la revendication 8, **caractérisé en ce que** les faces d'appui (58, 67) de la première partie de bride (40) et la face d'appui (67) de la deuxième partie de bride (66) présentent des contours à complémentarité de forme (53, 54) correspondants s'adaptant les uns dans les autres, et/ou qu'est prévu au niveau de la face d'appui (58, 67) d'une partie de bride (40, 66) un évidement destiné à venir en prise de manière libre avec un contour à complémentarité de forme (53, 54) de l'autre partie de bride (40, 66).

10. Attelage de remorque selon la revendication 8 ou 9, **caractérisé en ce que** la première partie de bride (40) de la première et de l'au moins une deuxième position longitudinale de montage (M1, M2) présente des contours à complémentarité de forme (53) associés, de sorte qu'au moins un contour à complémentarité de forme (54) de la deuxième partie de bride (66) s'adapte dans la position longitudinale de montage (M1, M2) respective dans un contour à complémentarité de forme (53) de la première partie de bride (40).

11. Attelage de remorque selon l'une quelconque des revendications précédentes, **caractérisé en ce qu'**au moins une des parties de bride (40, 66) forme une partie constitutive d'un seul tenant de la partie de système de maintien (30) ou de la partie d'attelage (60).

12. Attelage de remorque selon l'une quelconque des revendications précédentes, **caractérisé en ce que** la face d'appui (58) de la première partie de bride (40) s'étend sensiblement de manière verticale dans l'état monté au niveau du véhicule automobile (11) de l'attelage de remorque, et/ou que les parties de bride (40, 66) sont disposées à peu près au centre en longueur et/ou entre des sections d'incurvation (32, 64) du bras d'attelage (15), et/ou que dans l'état monté au niveau du véhicule automobile (11) de l'attelage de remorque (10), au moins une, de préférence les deux, parties de bride (40, 66) sont dissimulées dans un espace intermédiaire entre le pare-chocs (16) et la carrosserie du véhicule automobile (11) et/ou les deux parties de bride (40, 66) sont disposées dans une zone libre entre l'élément d'attelage (65) de la partie d'attelage (60) et le pare-chocs (16) du véhicule automobile (11).

13. Attelage de remorque selon l'une quelconque des revendications précédentes, **caractérisé en ce que** le premier ensemble de vis (59) présente un premier gabarit de trou de logements de vis servant à visser ou faire passer par enfichage des vis, avec lequel des ouvertures de passage par enfichage ou des parties faisant saillie de vis du deuxième ensemble de vis (69) sont en affleurement dans la première et l'au moins une deuxième position longitudinale de montage (M1, M2).

14. Attelage de remorque selon l'une quelconque des revendications précédentes, **caractérisé en ce qu'**au moins un contour à complémentarité de forme (35), en particulier une partie faisant saillie à complémentarité de forme, destiné à venir en prise avec un contour à complémentarité de forme (45) disposé au niveau du système de maintien (20) côté véhicule, en particulier un logement à complémentarité de forme, est disposé au niveau de la partie de système de maintien (30) dans la zone de la partie faisant saillie d'enfichage (33), et/ou que le dispositif de verrouillage (70) présente au moins un logement de verrouillage (72) dans la zone du logement d'enfichage (24) du système de maintien (20) côté véhicule et au moins un corps de verrouillage (71), en particulier une boule, dans la zone de la partie faisant saillie d'enfichage (33) de la partie de système de maintien (30), dans lequel l'au moins un corps de verrouillage (71) peut être ajusté par un corps d'actionnement (73) entre une position de verrouillage venant en prise par complémentarité de forme avec l'au moins un logement de verrouillage (72) et une position de déblocage sortant du logement de verrouillage (72), dans lequel il est prévu de manière opportune que le corps d'actionnement (73) est monté de manière mobile par coulissement, en particulier par un coulissement longitudinal, dans un espace intérieur de la partie de système de maintien (30), dans lequel l'au moins un corps de verrouillage (71) peut être ajusté par un coulissement du corps d'actionnement (73) entre la position de déblocage et la position de verrouillage.

15. Attelage de remorque selon l'une quelconque des revendications précédentes, **caractérisé en ce que** la face d'appui de la première partie de bride (40) a une extension telle que la face d'appui (67) de la deuxième partie de bride (66) se situe, dans au moins deux, de préférence dans chacune, des positions longitudinales de montage (M1, M2), sur toute la surface ou sensiblement sur toute la surface de la face d'appui de la première partie de bride (40).
